(19) Europäisches Patentamt
European Patent Office
Office européen des brevets

(11) Numéro de publication: **0 176 439 B1**

# (12) FASCICULE DE BREVET EUROPEEN

(45) Date de publication du fascicule du brevet: **20.04.88**

(21) Numéro de dépôt: **85401827.2**

(22) Date de dépôt: **19.09.85**

(51) Int. Cl.⁴: **C 08 G 85/00**, C 08 G 65/34, C 08 G 65/48, C 08 G 18/67

## (54) Polymères à base d'alcool-thio-éthers insaturés.

(30) Priorité: **25.09.84 FR 8414666**

(43) Date de publication de la demande: **02.04.86 Bulletin 86/14**

(45) Mention de la délivrance du brevet: **20.04.88 Bulletin 88/16**

(84) Etats contractants désignés: **CH DE GB LI NL SE**

(56) Documents cités:
**EP - A - 0 054 379**
**EP - A - 0 055 531**
**US - A - 4 289 864**

(73) Titulaire: **SOCIETE NATIONALE ELF AQUITAINE Société anonyme dite, Tour Elf 2, Place de la Coupole La Défense 6, F-92400 Courbevoie (FR)**
Titulaire: **Products Research and Chemical Corporation, 5430 San Fernando Road, Glendale, CA 91209 (US)**

(72) Inventeur: **Labat, Yves, 35 bis rue Hounau, F-64000 Pau (FR)**

(74) Mandataire: **Kohn, Armand, 5 Avenue Foch, F-92380 Garches (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 176 439 B1

ACTORUM AG

## Description

L'invention se rapporte à un nouveau type de polymères et copolymères insaturés comportant au moins deux fonctions thioéthers en bout de chaîne et/ou branchées; elle comprend les plastifiants, masses plastiques et autres produits pouvant être obtenus à partir de ces polymères. Le procédé de préparation de ces derniers fait également partie de l'invention.

Les polymères insaturés sont industriellement particulièrement intéressants; ils constituent des composés intermédiaires, fonctionnalisables, grâce à leurs doubles liaisons sur lesquelles on peut faire réagir des composés possédant une fonction réactive vis-à-vis de l'insaturation conduisant ainsi à des polymères déterminés; on peut également les vulcaniser au niveau de la double liaison.

Les polymères insaturés comportant dans leur chaîne des motifs thioéthers sont particulièrement intéressants pour la fabrication de polysulfures destinés à la préparation de mastics, joints, etc.

De nombreuses méthodes de préparation de polymères insaturés sont déjà connues, en particulier celles qui consistent à polymériser des composés insaturés sur eux-mêmes.

La préparation des polymères ou copolymères, comportant au moins deux motifs thioéthers, selon l'invention, consiste en la condensation d'un alcool thioéther insaturé répondant à la formule (3) avec des polymères ou copolymères de polyols, thiapolyols, polythiols ou/et diisocyanates (appelés dans le texte pré-polymères) dont la chaîne est porteuse de groupements fonctionnels terminaux, ou de groupements branchés OH, isocyanate, acide, ester, aldéhyde ou chlorure d'acide, réactifs vis-à-vis de la fonction alcool de l'alcool thioéther.

La réaction de l'alcool thioéther insaturé avec le prépolymère a lieu entre 100° et 200°C, principalement entre 120° et 180°C avec élimination de l'eau, en présence d'un système catalytique connu en soi. Cette réaction peut se faire par exemple par déshydratation en mélange avec des glycols (comme décrit dans le brevet US-A-4366307 pour l'hydroxy-1--thia-3-nonène-8). La double liaison reste libre pour fixer des composés possédant une fonction réactive vis-à-vis de l'insaturation.

Parmi les prépolymères susceptibles de réagir avec un alcool polythioéther insaturé, et qui constituent d'excellentes matières premières pour la préparation des polysulfures, on connaît dans l'industrie, particulièrement ceux qui sont préparés à partir d'alcools thioéthers. Ainsi a-t-on préparé des polythioéthers, porteurs de groupes terminaux -OH, par condensation du thiodiglycol en présence d'un catalyseur d'étherification, comme décrit dans les brevets US 3312743 et 3335189. D'autres poly-(alcools-thioéthers) ont été produits par la copolymérisation du thiodiglycol avec des diols, ce qui est exposé dans les brevets US 3005803, 3985708 et 4093599. Dans la préparation des prépolymères utilisables pour la préparation des polysulfures, un progrès net a été accompli par la mise au point d'une classe de polythioéthers-alcools présentant l'avantage d'être liquides, non cristallisables, durcissables et résistant à l'eau, aux solvants et à la chaleur. Dans ces polymères un -OH se trouve en position β d'un -S- et le motif de la chaîne linéaire ou ramifiée est:

$$\left[ O - \underset{R^1}{\underset{|}{CH}} - \underset{R^2}{\underset{|}{CH}} - S - (QS)_p - \underset{R^3}{\underset{|}{CH}} - \underset{R^4}{\underset{|}{CH}} \right]_n \qquad (1)$$

où Q est $-CH_2CH_2CH_2CH_2-$, $-CH_2CH_2-$, $-CH_2CH_2-SCH_2CH_2-$ où $-CH_2CH_2OCH_2CH_2-$, p étant 0 ou 1 et n 8 à 200. Les radicaux $R^1$ à $R^4$ sont des H ou des alkyles inférieurs: le total de leurs atomes de carbone doit être tel que le polymère reste liquide, ce qui impose un choix guidé par une expérimentation appropriée.

Ces prépolymères à fonctions terminales OH, décrits dans le brevet US 4366307, sont ensuite condensés avec des composés de formule $HO-CH_2-CH_2-S-R'-CH=CH_2$, et particulièrement avec l'hydroxy-1 thia-3 nonène-8; la fonction OH se condense avec les OH du prépolymère; et l'on obtient un polymère insaturé sur lequel on pourra faire réagir des composés possédant une fonction réactive vis-à-vis de la double liaison. Mais ce composé est relativement cher, et il conduit à des polymères d'alcools thio-éthers ne possédant qu'une seule double liaison en bouts de chaîne; la fonctionnalisation de ces polymères étant insuffisante pour l'obtention de polysulfures suffisamment réticulés, possédant des qualités requises, il faut ajouter au prépolymère (1) des triols, tel que le trihydroxy-1,5,13-oxa-7-dithia-3,11-tridécane

$$HO-(CH_2)_2\,S-CH_2-\underset{OH}{\underset{|}{CH}}-CH_2-O-(CH_2)_3\,S-CH_2OH;$$

Ce composé, préparé par réaction du mercapto-éthanol sur l'allyl glycidyl éther, est un composé cher qui augmente d'autant le prix du prépolymère, et n'introduit pas de fonctions thioéthers fort utiles dans les polysulfures. Ainsi les polymères d'alcools thioéthers insaturés décrits dans le brevet US 4366307 présentent-ils un certain nombre d'inconvénients.

Des prépolymères, destinés à la préparation des polysulfures, à fonctions terminales diisocyanates sont décrits dans le brevet US 3923748. Ils sont préparés par réaction de polyglycols avec un excès de diisocyanate. Selon ce brevet l'insaturation des bouts de chaîne, sur laquelle des mercaptans pourront réagir, est créée par l'addition d'un alcool insaturé tel que l'alcool allylique qui n'apporte pas de S.

La présente invention apporte à la technique susmentionnée un perfectionnement qui présente l'avantage d'une production plus économique et la possibilité d'obtention plus rapide de masses plastiques ou élastomériques plus dures. L'invention permet de varier, selon les besoins, les propriétés des polymères par simple modification des rapports moléculaires au cours de la synthèse des hydroxy thia-alcènes servant à leur fabrication. Elle peut introduire un nombre plus grand de doubles liaisons dans le polymère insaturé.

Les polymères ou copolymères suivant l'invention résultant de la polycondensation de polyols, thiapolyols, polythiols ou/et di-isocyanates, qui comporte au moins deux motifs thioéther, sont caractérisés par des groupements terminaux ou/et branchés

$$-O-(CH_2)_n-S \left[ \begin{array}{l} CH-CH=CH-(CH_2)_m-CH_2 \\ | \\ R \end{array} \right]_p H \qquad (2)$$

Dans ces groupements, R est un H ou une ramification alkylique, dont le nombre d'atomes de carbone est de 1 à 12, mais est en général 1 à 6; m est 0 à 6, n 1 à 10 et de préférence 2 à 6, p étant 1 à 10 et le plus souvent 1 à 3 dans les cas des produits les plus accessibles.

En fait, des alcools thioéthers porteurs d'une double liaison étaient connus précédemment, comme on l'a indiqué dans le brevet US 4 366 307 précité. Mais dans ces produits antérieurs la double liaison se trouvait en bout de chaîne du groupe thioéther, tandis que dans les polymères suivant l'invention, au moins l'une des doubles liaisons est en β de l'atome de soufre, et il n'y a aucune autre double liaison en bout de chaîne. De plus les nouveaux polymères peuvent porter un nombre p de doubles liaisons qui modifient les propriétés du produit et des produits dérivés; ce sont ces nouveaux alcools thioéthers insaturés qui apportent ces avantages.

Ces alcools-thioéthers insaturés peuvent être économiquement préparés par l'action d'un mercapto-alcool sur une dioléfine conjuguée; la position conjuguée des deux doubles liaisons, dans le diène ainsi utilisé, représente l'intérêt de l'invention. Le composé, employé pour la fabrication des nouveaux polymères, répond donc à la formule

$$HO-(CH_2)_n-S \left[ \begin{array}{l} CH-CH=CH-(CH_2)_m-CH_2 \\ | \\ R \end{array} \right]_p H \qquad (3)$$

où R, n, m et p ont les mêmes significations que plus haut, au sujet de la formule (2).

A titre d'exemple, on décrit ci-après quelques uns des alcools thioéthers insaturés, particulièrement pratiques pour la réalisation de l'invention. Il s'agit de composés obtenus par la réaction du mercapto-éthanol avec le butadiène:

$$HSCH_2CH_2OH + CH_2=CH-CH=CH_2 \rightarrow HOCH_2CH_2-S-CH_2-CH=CH-CH_3 \qquad (4)$$

hydroxy-1-thia-3-heptène-5 (HTH)

Ce composé est désigné par la suite par l'abréviation «HTH»; il correspond à la formule (3) dans laquelle n = 2, R = H, m = O, p = 1.

Le second composé, qui se forme à côté du précédent, surtout lorsque le nombre de moles de butadiène dépasse 2 pour 1 de mercapto-éthanol, est

$$HOCH_2CH_2S-CH_2-CH=CH-CH_2-CH_2-CH=CH-CH_3 \qquad (5)$$

hydroxy-1-thia-3-undécadiène-5,9 (HTU)

Il résulte de l'addition d'une mole de butadiène au composé HTH précédent; n, R et m sont les mêmes que plus haut, mais p = 2.

Une autre série d'alcools thioéthers insaturés se forme, surtout lorsqu'il y a plus de 3 moles de butadiène par mole de mercapto-éthanol; ce sont des produits renfermant plus de 2 doubles liaisons, en particulier:

$$HOCH_2CH_2S-CH_2-CH=CH-CH_2-CH_2-CH=CH-CH_2-CH_2-CH=CH-CH_3 \qquad (6)$$

hydroxy-1-thia-3-pentadécatriène-5,9,13 (HTP)

Ce triène ou ses isomères se forment en proportions croissantes lorsque le rapport butadiène/mercapto-éthanol augmente, surtout au-delà de 3. Ici les coefficients n, m et R sont les mêmes que plus haut, mais p = 3.

Des isomères de ces trois composés existent, mais la structure des produits ci-dessus est largement prédominante. Ainsi y-a-t'il, en particulier, des isomères à terminaison vinylique, identifiés par analyse RMN, tels que:

$HO---(CH_2)_2-S-CH_2-CH_2-CH=CH_2$ environ 5% par rapport à HTH

$$HO-(CH_2)_2-S-(CH_2)_2-\underset{\displaystyle CH_3}{\underset{|}{C}}=CH-CH_2-CH=CH_2$$

environ 20% par rapport à HTU

$$HO-(CH_2)_2-S-CH_2-CH=CH-CH_2-CH_2-CH_2-\underset{\displaystyle CH_3}{\underset{|}{C}}=\underset{\displaystyle \overset{\displaystyle CH}{\|}\atop CH_2}{\underset{|}{CH}}-CH_2$$

en mélange avec HTP

hydroxy-1-thia-3-méthyl-10-tétradécatriène-5,10,13

HTH, HTU et HTP peuvent être séparés après distillation du mélange avec leurs isomères.

Cette variété de structure des alcools-thioéthers permet de faire varier utilement les propriétés des polymères suivant l'invention, auxquels donnent naissance ces produits. Pour cela, on peut modifier le rapport molaire diène/mercapto-alcool au moment de la préparation des alcools thioéthers ou, éventuellement, la séparation des produits obtenus, comme mentionné plus haut; cependant l'utilisation de ces produits bruts constitue une forme de réalisation intéressante.

Avec des diènes autres que le butadiène, les choses se passent de la même façon, mais naturellement, le nombre d'isomères possibles est plus grand. A titre d'exemple, on décrit, ci-après, le premier composé, hydroxy-1-thia-3-éthyl-4-nonène-5.

$$HO-CH_2CH_2-S-\underset{\displaystyle C_2H_5}{\underset{|}{CH}}-CH=CH-CH_2CH_2CH_3$$

qui s'obtient à partir de l'octadiène-3,5 et du mercapto-éthanol; par rapport à la formule 2, on a ici n = 2, $R = C_2H_5$, m = 2, p = 1.

La principale application des polymères et copolymères insaturés selon l'invention est la préparation de produits élastomériques ou plastiques et de plastifiants pour des élastomères à base de polymères de thio composés.

Les polymères insaturés, obtenus, peuvent être directement vulcanisés en masses élastomériques par des peroxydes, ou par rayonnement. A ces polymères insaturés on peut également fixer, à nouveau, des groupes fonctionnels par réaction de composés possédant une fonction réactive vis-à-vis de l'insaturation. C'est le cas par exemple des mercaptans qui permettent d'obtenir des produits soufrés saturés, utilisables comme plastifiants ou comme additifs pour huile. L'emploi de mercaptan du type $HS(CH_2)_3$-$Si(OR^1)_3$ (dans lequel $R^1$ = alkyle) permet d'obtenir des polymères à fonction siloxane. C'est également le cas de la réaction de ces polymères insaturés avec des dithiols, permettant la formation de polymères à terminaison mercaptan, particulièrement recherchés pour la réticulation à froid par les oxydants classiques, tels que $MnO_2$, $PbO_2$ et autres, dans les applications aux joints et mastics, en particulier dans le domaine du bâtiment, du double vitrage.

Parmi les dithiols, qui peuvent être utilisés pour réagir avec les polymères insaturés, on peut citer:
$HS(CH_2)SH$; $HS(CH_2)_2SH$; $HS$-$CH_2S$-$CH_2SH$;
$HS(CH_2)_2S(CH_2)_2SH$; $HS(CH_2)_2$-$O$-$(CH_2)_2SH$;
$HS$-$(CH_2)_2$-$O$-$CH_2$-$O$-$(CH_2)_2SH$;
$HS(CH_2)_4$-$O$-$CH_2$-$O$-$(CH_2)_4SH$;
$HS(CH_2)_2$-$O$-$(CH_2)_2$-$O$-$(CH_2)_2SH$
sans que cette liste soit limitative.

Ce type de polymères est décrit dans le brevet US 4366307: la chaîne polymérique, constituée par des motifs dans lesquels le soufre est en β de la fonction terminale OH, est condensée avec l'hydroxy-1-thia-3-nonène-8 ou «HTN». Cet alcool thioéther n'étant porteur que d'une seule double liaison en bout de chaîne, il est nécessaire d'utiliser, parmi les molécules composant le polymère du brevet cité, un composé trifonctionnel, le trihydroxy-1,5,13-oxa-7-dithia-3,11-tridécane (composé allylglycidyléther provenant de la réaction du mercaptoéthanol et de l'allylglycidyléther), de fonctionnalité élevée, pour obtenir des produits de durcissement acceptables à la réticulation.

L'avantage des polymères et copolymères selon l'invention obtenus à partir des nouveaux alcools thioéthers insaturés est qu'ils apportent pour les composés comportant 2 ou 3 doubles liaisons la possibilité d'introduire une proportion plus grande de mercaptan pour une masse moléculaire et une viscosité données, permettant ainsi d'obtenir de meilleures propriétés de réticulation, rendant inutile l'emploi d'un composé trifonctionnel.

On peut ainsi obtenir des polymères polyfonctionnels à façon. Comme il a été décrit ci-dessus, il existe également divers prépolymères à fonctions isocyanates, aisément obtenus par réaction de glycols ou de triols de masses moléculaires variables avec des diisocyanates (brevet US 3923748). Les fonctions isocyanates libres peuvent réagir avec les alcools thioéthers insaturés, pour donner des polymères suivant l'invention ayant au moins 2 insaturations, capables de réagir avec des dithiols permettant l'obtention de polymères à fonctions mercaptans qui peuvent alors être vulcanisés.

D'autres avantages de ces alcools thioéthers insaturés ont été décrits au début de ce texte: coût de production avantageux, et rendement en produits insaturés pratiquement quantitatif, même pour les composés comprenant une seule double liaison.

L'invention est illustrée non limitativement par les exemples qui suivent.

*Exemple 1*
*Préparation de Polymère avec «HTH»*

Dans un réacteur de 20 litres, thermostaté et agité, et pouvant fonctionner sous vide, on introduit:
- thiodiglycol: 7770 g soit 63,7 moles
- hydroxyéthyl hydroxypropylsulfure: 3330 g soit 24,5 moles
- trihydroxy-1,5,13-oxa-7-dithia-3,11-tridécane: 540 g soit 2 moles (HDT)
- hydroxy-1-thia-3-heptène-5: 1320 g soit 20 moles (HTH)
- un mélange de catalyseurs: triphénylphosphite (140 g) et thiodiphénol (30 g).

La température est portée à 150°C puis à 180°C sous un vide progressif permettant l'élimination de l'eau formée. La réaction est terminée lorsque l'indice d'hydroxyle du mélange réactionnel est inférieur à 7.

On obtient 10270 g de produit que l'on porte, sous agitation à 80°C, et on y introduit 1149 g (7,46 moles) de dimercaptodiéthylsulfure et 110 g de catalyseur radicalaire, azobis-isobutyronitrile, associé à un composé basique, la tétraméthylguanidine: 10 g.

On obtient après réaction à 80°C un polymère liquide, réticulable en présence des catalyseurs d'oxydation habituels:

| | | |
|---|---|---|
| Polymère | 56 | parties |
| Plastifiant d'ester phtalique | 12 | » |
| $MnO_2$ | 10 | » |
| Noir de Carbone | 10 | » |
| Autres charges | 12 | » |

la masse obtenue présente les propriétés suivantes:

Dureté Shore: 50
Résistance à la rupture: $22 \times 10^5$ Pa
Allongement à la rupture: 250%.

*Exemple 2*
*Préparation de Polymère avec «HTU»*

Dans un évaporateur rotatif de 2 litres on introduit:
- thiodiglycol: 805 g soit 6,60 moles
- hydroxythiaundécadiène (HTU): 93 g soit 0,85 moles
- puis le système catalytique:
  - triphénylphosphite : 13 g
  - thiodiphénol : 3 g

En opérant dans les conditions de l'exemple précédent on obtient 1011 g d'un produit d'indice d'hydroxyle = 6. Le polymère insaturé est traité à

80°C par 178,6 g (1,16 mole) de dimercaptodiéthyl-sulfure en présence de catalyseur radicalaire et de composé basique · la tétraméthylguanidine.

On obtient un polymère de viscosité: 15,5 Pa·s à 25°C. Ce polymère est introduit dans la composition suivante:

| | | |
|---|---|---|
| — Polymère | 47 | parties |
| — Plastifiant | 15 | » |
| — $MnO_2$ | 15 | » |
| — Noir de carbone | 10 | » |
| — Autres charges | 13 | » |

On obtient après réticulation les résultats suivants:

— Dureté Shore: 52
— Résistance à la rupture: $26 \times 10^5$ Pa
— Allongement à la rupture: 250%.

On remarquera que ce polymère a été synthétisé sans l'utilisation de composé trifonctionnel (HDT).

*Exemple 3*
*Mélange «HTH» + «HTU»*

Dans un évaporateur de 2 litres on introduit:
— thiodiglycol: 777 g soit 6,37 moles
— hydroxyéthyl hydroxypropyl sulfure: 333 g soit 2,45 moles
— un mélange HTH + HTU = 141 g soit 0,551 mole de HTH et 0,366 mole de HTU
— trihydroxy-1,5,13-oxa-7-dithia-3,11-tridécane: 41 g (0,151 mole)
— un mélange catalytique de 13,5 g de triphénylphosphite et de thiodiphénol (3 g).

On porte le mélange de 150° à 180°C sous un vide progressif et on obtient un polymère liquide insaturé de 1014 g, d'indice d'hydroxyle = 5.

Le polymère insaturé est ensuite mis à réagir à 80°C avec un dithiol, 120 g de dimercapto-diéthylsulfure (0,78 mole) en présence de catalyseur radicalaire.

On obtient un polymère à terminaison mercaptan de viscosité à 25°C de 30,0 Pa·s qui par réticulation donne un polymère élastomérique de dureté Shore: 51.

*Exemple 4*

Dans un réacteur de 20 litres, thermostaté, on introduit:
— thiodiglycol: 614 g
— hydroxyéthylhydroxypropylsulfure: 260 g
— hydroxy-1-thia-3-pentadécatriène-5,9,13 «HTP»: 120 g

puis le système catalytique: triphényl phosphite (11 g) et thiodiphénol (2 g).

La température est portée de 150° à 180°C sous un vide progressif permettant l'élimination de l'eau formée. En fin de réaction on obtient un indice d'hydroxyle de 4. On recueille 786 g de polymère.

Le polymère insaturé, obtenu, est traité à 80°C par 1,26 mole de sulfure de mercaptoéthyle. On obtient un polymère ayant un taux de SH de 4% et une viscosité de 80,0 Pa·s. Ce polymère formulé avec le Mn $O_2$ comme catalyseur d'oxydation donne un polymère élastomérique de dureté Shore: 48.

*Exemple 5*

Dans un réacteur de 20 litres, on introduit 10165 g (1,752 mole) de polyoxy propylène triol de masse moléculaire 5800, et 915 g (5,256 moles) de toluène diisocyanate. On porte le réacteur à 80°C et on laisse réagir, ce qui donne un prépolymère ayant un taux résiduel de NCO de 1,96%. On ajoute dans le réacteur 742 g (4,9 moles) d'alcools insaturés correspondant au mélange réactionnel de l'adduct mercaptoéthanol-butadiène, principalement produit selon formule (4).

On ajoute au polymère insaturé, obtenu, 1206 g (7,1 moles) de dimercapto-1,8-dioxa-3,5-octane, et on laisse réagir à 60°C en présence d'un catalyseur radicalaire.

On obtient un polymère à fonctions mercaptans, qui présente une viscosité de 80,0 Pa·s à 25°C.

Par réticulation au moyen d'oxydes minéraux, on obtient une masse élastomérique de dureté Shore: 40.

*Exemples 6 à 9*

La préparation suivant l'exemple 4 est répétée, mais chaque fois le «HTP» est remplacé par le même nombre de moles de «HTH», de «HTU» ou de «HTN». Ces hydroxy thia alcènes ont été distillés avant leur emploi.

Dans les polymères obtenus les oxhydriles résiduels étaient éliminés par traitement au toluène di-isocyanate, sauf dans l'exemple 8.

Le durcissement était effectué en 24 heures à 25°C avec les proportions en poids % de $MnO_2$ indiquées au Tableau des résultats ci-après.

*RESULTATS*

| Exemple n° | 6 | 7 | 8 | 9 (comparatif) |
|---|---|---|---|---|
| Alcool thioéther non saturé, utilisé | HTH | HTU | HTU | HTN |
| Sa masse molaire | 4000 | 6000 | 4000 | 3000 |
| Viscosité en Pa·s | 78,0 | 37,0 | 15,0 | 39,0 |
| $MnO_2$ % | 42 | 40 | 49 | 42 |
| Dureté Shore de la masse durcie | 30 | 39 | 42 | 22 |

On peut constater que le durcissement des polymères renfermant des motifs suivant l'invention, HTH ou HTU, se fait bien mieux que si ces motifs sont remplacés par les HTN de l'art antérieur (US 4366307 exemple 1).

**Revendications**

1. Polymère ou copolymère, résultant de la polycondensation de polyols, thiapolyols, polythiols ou/et di-isocyanates, qui comporte au moins deux

motifs thioéther, caractérisé en ce que sa chaîne porte des groupements terminaux ou/et branchés

$$-O-(CH_2)_n-S-\left[\begin{array}{l}CH-CH=CH-(CH_2)_m-CH_2\\ | \\ R\end{array}\right]_p-H \qquad (2)$$

dans lesquels R est un H ou un alkyle en $C_1$ à $C_{12}$, m est 0 à 6, n est 1 à 10 et p 1 à 10.

2. Polymère ou copolymère suivant la revendication 1, caractérisé en ce que R étant H ou un alkyle en $C_1$ à $C_6$, n est 2 à 6 et p est 1 à 3.

3. Polymère ou copolymère suivant la revendication 1 ou 2, caractérisé en ce que sa chaîne porte à la fois plusieurs sortes des dits motifs, notamment p = 1 à p = 3.

4. Polymère ou copolymère suivant une des revendications 1 à 3, résultant de la condensation du thiodiglycol avec de l'hydroxyéthyl hydroxypropyl sulfure et d'un alcool thioéther insaturé, caractérisé en ce que les dits motifs thioéther dérivent de l'hydroxy-1-thia-3-heptène-5, de l'hydroxy-1-thia-3-undécadiène-5,9, de l'hydroxy-1-thia-3-pentadécatriène-5,9,13 ou de plusieurs de ces composés à la fois.

5. Polymère ou copolymère suivant une des revendications précédentes, caractérisé en ce qu'il renferme, en outre, des motifs dérivés de l'hydroxy-1-thia-3-heptène-6, de l'hydroxy-1-thia-3-méthyl-6-décadiène-6,9, de l'hydroxy-1-thia-3-méthyl-10-tétradécatriène-5,10,13 ou de plusieurs de ces composés.

6. Procédé de préparation d'un polymère ou copolymère suivant une des revendications 1 à 5, par condensation d'un alcool thioéther insaturé avec un polymère de polyol, thia-polyol, polythiol ou/et di-isocyanate, porteur de groupes terminaux ou/et branchés OH, isocyanate, acide, ester, aldéhyde ou chlorure d'acide, entre 100° et 200°C, en présence d'un catalyseur de condensation, caractérisé en ce que l'alcool thioéther insaturé est du type

$$HO-(CH_2)_n-S-\left[\begin{array}{l}CH-CH=CH-(CH_2)_m-CH_2\\ | \\ R\end{array}\right]_p-H \qquad (3)$$

où R désigne un H ou un alkyle en $C_1$ à $C_{12}$, n est 1 à 10, m est 0 à 6 et p 1 à 10.

7. Procédé suivant la revendication 6, caractérisé en ce que R étant H ou alkyle en $C_1$ à $C_6$, n est 2 à 6 et p 1 à 3.

8. Procédé suivant la revendication 6 ou 7, caractérisé en ce que la condensation est effectuée sur un mélange de plusieurs alcool-thioéthers insaturés ayant des valeurs de p différentes.

9. Procédé suivant la revendication 7, caractérisé en ce que le mélange des alcools-thioéthers insaturés, employé, est constitué par le produit brut de la réaction de 1 à 10 moles d'un diène conjugué avec un mercapto-alcool.

10. Procédé suivant la revendication 9, caractérisé en ce que le diène conjugué est le butadiène, le mercapto-alcool étant le mercapto-éthanol.

11. Application d'un polymère ou copolymère, suivant une des revendications 1 à 5, à l'obtention d'une masse plastique ou élastomérique, caractérisé en ce que l'on fait réagir le polymère ou copolymère avec un mercaptan.

12. Application suivant la revendication 11, caractérisé en ce qu'après la réaction avec le mercaptan, le produit est durci par l'action de $MnO_2$ ou/et de $PbO_2$.

13. Application d'un polymère ou copolymère selon une des revendications 1 à 5, à la production d'une masse durcie par l'action d'un oxydant ou d'un rayonnement.

**Patentansprüche**

1. Aus der Polykondensation von Polyolen, Thiapolyolen, Polythiolen oder/und Diisocyanaten resultierendes Polymer oder Copolymer, das wenigstens zwei Thioethersequenzen aufweist, dadurch gekennzeichnet, dass seine Kette endständige oder/und verzweigte Gruppen aufweist:

$$-O-(CH_2)_n-S-\left[\begin{array}{l}CH-CH=CH-(CH_2)_m-CH_2\\ | \\ R\end{array}\right]_p-H \qquad (2)$$

worin R H oder $C_1$- bis $C_{12}$-Alkyl ist, m 0 bis 6 ist, n 1 bis 10 ist und p 1 bis 10.

2. Polymer oder Copolymer nach Anspruch 1, dadurch gekennzeichnet, dass R H oder $C_1$- bis $C_6$-Alkyl ist, n 2 bis 6 ist und p 1 bis 3 ist.

3. Polymer oder Copolymer nach Anspruch 1 oder 2, dadurch gekennzeichnet, dass seine Kette gleichzeitig mehrere Arten dieser Sequenzen aufweist, besonders p = 1 bis p = 3.

4. Polymer oder Copolymer nach einem der Ansprüche 1 bis 3, resultierend aus der Kondensation von Thiodiglykol mit Hydroxyethylhydroxypropylschwefel und einem ungesättigten Alkoholthioether, dadurch gekennzeichnet, dass sich diese Sequenzen von 1-Hydroxy-3-thiahept-5-en, 1-Hydroxy-3-thiaundeca-5,9-dien, 1-Hydroxy-3-thiapentadeca-5,9,13-trien oder von mehreren dieser Verbindungen gleichzeitig ableiten.

5. Polymer oder Copolymer nach einem der vorstehenden Ansprüche, dadurch gekennzeichnet, dass es unter anderem von 1-Hydroxy-3-thiahept-6-en, 1-Hydroxy-3-thia-6-methyldeca-6,9-dien, 1-Hydroxy-3-thia-10-methyltetradeca-5,10,13-trien oder von mehreren dieser Verbindungen abgeleitete Sequenzen umfasst.

6. Verfahren zur Herstellung eines Polymeren oder Copolymeren nach einem der Ansprüche 1 bis 5 durch Kondensation eines ungesättigten Alkoholthioethers mit einem Polymer von Polyol, Thiapolyol, Polythiol oder/und Di-isocyanat mit endständigen oder/und abzweigenden OH-, Isocyanat-, Säure-, Ester-, Aldehyd- oder Säurechloridgruppen zwischen 100 und 200°C in Gegenwart eines Kondensationskatalysators, dadurch gekennzeichnet, dass der ungesättigte Alkoholthioether von der Art ist

$$HO\text{-}(CH_2)_n\text{-}S \left[ \begin{array}{l} CH\text{-}CH{=}CH\text{-}(CH_2)_m\text{-}CH_2 \\ | \\ R \end{array} \right]_p H \qquad (3)$$

worin R H oder $C_1$- bis $C_{12}$-Alkyl bedeutet, n 1 bis 10 ist, m 0 bis 6 ist und p 1 bis 10.

7. Verfahren nach Anspruch 6, dadurch gekennzeichnet, dass R H oder $C_1$- bis $C_6$-Alkyl ist, n 2 bis 6 ist und p 1 bis 3 ist.

8. Verfahren nach Anspruch 6 oder 7, dadurch gekennzeichnet, dass die Kondensation mit einer Mischung verschiedener ungesättigter Alkoholthioether mit verschiedenen Werten für p bewirkt wird.

9. Verfahren nach Anspruch 7, dadurch gekennzeichnet, dass die eingesetzte ungesättigte Alkoholthioethermischung aus dem Rohprodukt der Reaktion von 1 bis 10 Mol eines konjugierten Diens mit einem Mercaptoalkohol zusammengesetzt ist.

10. Verfahren nach Anspruch 9, dadurch gekennzeichnet, dass das konjugierte Dien Butadien ist, wobei der Mercaptoalkohol Mercaptoethanol ist.

11. Verwendung eines Polymeren oder Copolymeren nach einem der Ansprüche 1 bis 5 zum Erhalt von plastischen oder elastomeren Massen, dadurch gekennzeichnet, dass man das Polymer oder Copolymer mit einem Mercaptan reagieren lässt.

12. Verwendung nach Anspruch 11, dadurch gekennzeichnet, dass das Produkt nach der Reaktion mit dem Mercaptan durch Einwirkung von $MnO_2$ oder/und $PbO_2$ gehärtet wird.

13. Verwendung eines Polymeren oder Copolymeren nach einem der Ansprüche 1 bis 5, zur Herstellung einer gehärteten Masse durch Einwirkung eines Oxidationsmittels oder von Strahlung.

**Claims**

1. Polymer or copolymer resulting from the polycondensation of polyols, thiapolyols, polythiols and/or di-isocyanates, which comprise at least two thioether groups, characterised in that its chain carries terminal and/or branched groups

$$\text{-}O\text{-}(CH_2)_n\text{-}S \left[ \begin{array}{l} CH\text{-}CH{=}CH\text{-}(CH_2)_m\text{-}CH_2 \\ | \\ R \end{array} \right]_p H \qquad (2)$$

in which R is an H or a $C_1$ to $C_{12}$ alkyl, m is 0 to 6, n is 1 to 10 and p is 1 to 10.

2. Polymer or copolymer according to claim 1, characterised in that R is H or a $C_1$ to $C_6$ alkyl, n is 2 to 6 and p is 1 to 3.

3. Polymer or copolymer according to claim 1 or 2, characterised in that its chain carries several kinds of such units, particularly p = 1 to p = 3.

4. Polymer or copolymer according to any of claims 1 to 3, resulting from the condensation of thiodiglycol with hydroxyethyl-hydroxypropyl-sulphide and an unsaturated thioether-alcohol, characterised in that the thioether groups are derived from 1-hydroxy-3-thia-heptene-5, 1-hydroxy-3-thia-undecadiene-5,9, 1-hydroxy-3-thia-pentadecadiene-5,9,13 or several of these compounds.

5. Polymer or copolymer according to any of the preceding claims, characterised in that it comprises in addition units derived from 1-hydroxy-3-thia-heptene-6, 1-hydroxy-3-thia-6-methyl-decadiene-6,9, 1-hydroxy-3-thia-10-methyl-tetradecatriene-5,10,13 or several of such compounds.

6. Process of preparation of a polymer or copolymer according to any of claims 1 to 5 by the condensation of an unsaturated thioether-alcohol with a polyol, thia-polyol, polythiol and/or di-isocyanate polymer, carrying terminal and/or branched OH, isocyanate, acid, ester, aldehyde or acid chloride groups, between 100°C and 200°C in the presence of a condensation catalyst, characterised in that the unsaturated thioether-alcohol is of the type

$$HO\text{-}(CH_2)_n\text{-}S \left[ \begin{array}{l} CH\text{-}CH{=}CH\text{-}(CH_2)_m\text{-}CH_2 \\ | \\ R \end{array} \right]_p H \qquad (3)$$

where R designates an H or a $C_1$ to $C_{12}$ alkyl, n is 1 to 10, m is 0 to 6 and p is 1 to 10.

7. Process according to claim 6, characterised in that R is H or a $C_1$ to $C_6$ alkyl, n is 2 to 6 and p is 1 to 3.

8. Process according to claim 6 or 7, characterised in that the condensation is effected with a mixture of several unsaturated thioether-alcohols having different p values.

9. Process according to claim 7, characterised in that the mixture of unsaturated thioether-alcohols employed is constituted by the crude reaction product of 1 to 10 moles of a conjugated diene with a mercapto-alcohol.

10. Process according to claim 9, characterised in that the conjugated diene is butadiene, the mercapto-alcohol being mercapto-ethanol.

11. Use of a polymer or copolymer according to any of the claims 1 to 5, for the production of a plastic or elastomeric material, characterised in that the polymer or copolymer is reacted with a mercaptan.

12. Use according to claim 11, characterised in that after the reaction with the mercaptan the product is hardened by the action of $MnO_2$ and/or $PbO_2$.

13. Use of a polymer or copolymer according to any of claims 1 to 5, in the production of a material hardened by the action of an oxydising agent or radiation.